# EUROPÄISCHE PATENTSCHRIFT

(11) **EP 1 311 337 B1**
(45) Veröffentlichungstag und Bekanntmachung des Hinweises auf die Patenterteilung: **27.07.2011**
(21) Anmeldenummer: 01971892.3
(22) Anmeldetag: 08.08.2001
(51) Int. Cl.: B01D 53/83, B65G 47/16

(54) **ANLAGE ZUR RAUCHGASREINIGUNG UND VERFAHREN ZUR ZUFÜHRUNG EINES REINIGUNGSMITTELS**
SYSTEM FOR FLUE GAS PURIFICATION AND METHOD FOR INTRODUCING A PURIFYING AGENT
SYSTEME D'EPURATION DE GAZ DE FUMEES ET PROCEDE D'ACHEMINEMENT D'UN PRODUIT D'EPURATION

(30) Priorität: 21.08.2000 EP 00117951
(43) Veröffentlichungstag der Anmeldung: 21.05.2003
(73) Patentinhaber: SIEMENS AKTIENGESELLSCHAFT, 80333 München (DE)
(72) Erfinder: DIRAUF, Peter, 91056 Erlangen (DE); KIEFER, Wolfgang, 91056 Erlangen (DE); LEUZE, Andreas, 91090 Effeltrich (DE); MADL, Peter, 91301 Forchheim (DE); ROSENKRANZ, Jens, 06333 Hettstedt (DE)
(86) Internationale Anmeldenummer: PCT/EP2001/009179
(87) Internationale Veröffentlichungsnummer: WO 2002/016013

(56) Entgegenhaltungen:
- EP-A- 0 882 490
- DE-A- 3 925 818
- FR-A- 2 633 585

## Beschreibung

Die Erfindung betrifft eine Anlage zur Rauchgasreinigung mit einer Dosiervorrichtung für ein Reinigungsmittel sowie ein Verfahren zur Zuführung eines Reinigungsmittels für eine solche Anlage zur Rauchgasreinigung zu einer Dosiervorrichtung.

Bei einer Anlage zur Rauchgasreinigung wird zum Reinigen des Rauchgases im Allgemeinen ein Verbrauchsmittel als Reinigungsmittel eingesetzt. Dies ist beispielsweise ein Sorptionsmittel, das als Schüttgut angeliefert wird. Ein typisches Beispiel eines Sorptionsmittels ist beispielsweise sogenannter Herdofenkoks. Das Reinigungsmittel wird zu der Anlage meist in einem Aufbewahrungsbehältnis angeliefert, im Fall des Herdofenkoks ist dies typischerweise ein sogenannter "Big-Pack".

Das Reinigungsmittel wird einer Reinigungseinheit in dosierter Menge zugeführt. Hierzu ist eine Dosiervorrichtung vorgesehen. Dieser Dosiervorrichtung wird das Reinigungsmittel wiederum über das Aufbewahrungsbehältnis zugeführt. Das Aufbewahrungsbehältnis ist ausreichend groß, um den Bedarf ein Reinigungsmittel für eine längere Zeitspanne, beispielsweise mehrere Tage, zu decken. Sobald das Reinigungsmittel eines Aufbewahrungsbehältnisses aufgebraucht ist, muss dieses durch ein volles ersetzt werden. Aufgrund der Größe der Aufbewahrungsbehältnisse erfolgt dies im allgemeinen mit Hilfe eines Gabelstaplers, mit dem das volle Aufbewahrungsbehältnis zu der Dosiervorrichtung gebracht wird, nachdem das leere Aufbewahrungsbehältnis entfernt wurde. Dies erfordert einen großen Zeitaufwand.

In der DE 39 25 818 A1 ist eine Zinkbadreinigungsanlage offenbart, die mit einem Filterstaub als Reinigungsmittel betrieben wird. Gesättigter Filterstaub muss dabei manuell abtransportiert, und frischer Filterstaub manuell zugeführt werden.

Der vorliegenden Erfindung liegt die Aufgabe zugrunde, ein einfaches und kostengünstiges Wechseln der Aufbewahrungsbehältnisse zu ermöglichen.

Die Aufgabe wird gemäß der Erfindung gelöst durch eine Anlage zur Rauchgasreinigung mit einer Dosiervorrichtung für ein Reinigungsmittel, welches aus einem Aufbewahrungsbehältnis der Dosiervorrichtung zuführbar ist, wobei zur Aufnahme mehrerer Aufbewahrungsbehältnisse eine Sammelvorrichtung vorgesehen ist, mittels derer die Aufbewahrungsbehältnisse automatisch zu der Dosiervorrichtung verfahrbar sind.

Mit der automatischen Verfahrbarkeit wird der Vorteil erzielt, dass ein aufwendiges und zeitraubendes manuelles Wechseln der Aufbewahrungsbehältnisse nicht notwendig ist. Gleichzeitig wird die Anzahl der notwendigen Eingriffe des Bedienpersonals deutlich reduziert, da mehrere Aufbewahrbehältnisse in der Sammelvorrichtung aufgenommen werden, so dass insgesamt die Menge an Reinigungsmittel in der Sammelvorrichtung für einen sehr langen Zeitraum ausreicht, während dessen ein Eingriff des Bedienpersonals nicht notwendig ist. Gleichzeitig wird eine zusätzliche weitere Lagerhaltung neben der Sammelvorrichtung hinfällig.

Die Sammelvorrichtung weist zudem eine Fördereinheit zum Verfahren der Aufbewahrungsbehältnisse auf. Mit der Fördereinheit wird also aus der Sammelvorrichtung heraus oder im Rahmen der Sammelvorrichtung das jeweilige Aufbewahrungsbehältnis zu der Dosiervorrichtung transportiert. Diese Fördereinheit dient gleichzeitig dazu, ein leeres Aufbewahrungsbehältnis automatisch von der Dosiervorrichtung zu entfernen. Die Sammelvorrichtung erfüllt also eine Doppelfunktion, nämlich das Aufbewahren mehrerer Behältnisse und deren automatischen Transport.

Die Fördereinheit ist umlaufend ausgebildet, um ein einfaches Wechseln, also ein Entfernen des leeren Aufbewahrungsbehältnisses und ein Zuführen des vollen Aufbewahrungsbehältnisses, zu ermöglichen.

Gemäß einer zweckdienlichen Ausbildung ist die Fördereinheit als Sammelschiene aufgeführt, an die die Aufbewahrungsbehältnisse einhängbar sind. Dies ermöglicht ein einfaches Verfahren der Aufbewahrungsbehältnisse. Alternativ zu der Sammelschiene können die Aufbewahrungsbehältnisse auch auf ein Förderband oder Förderollen aufgesetzt werden.

Alternativ zu der umlaufenden Ausbildung ist die Fördereinheit vorzugsweise als drehbare Einheit mit Lastarmen nach Art eines Karussells ausgestaltet, wobei an die Lastarme jeweils ein Aufbewahrungsbehältnis anhängbar ist. Durch Rotation dieser drehbaren Einheit wird dadurch ein Wechsel der Aufbewahrungsbehältnisse erzielt.

Um eine einfache Zuführung des Reinigungsmittels zu der Dosiervorrichtung zu ermöglichen, ist das jeweilige Aufbewahrungsbehältnis der Dosiervorrichtung vorzugsweise von oben zuführbar, um die Gewichtskraft auszunutzen. Weitere Hilfsmittel oder Hebewerkzeuge zur Beschickung der Dosiervorrichtung mit dem Reinigungsmittel sind nicht erforderlich.

Um ein zielgenaues Zuführen des jeweiligen Aufbewahrungsbehältnisses zu ermöglichen, ist ein Führungselement zur Führung des Aufbewahrungsbehältnisses beim Verfahren zur Dosiervorrichtung vorgesehen.

Das Reinigungsmittel ist dabei vorzugsweise ein Schüttgut. Insbesondere ist es ein Sorptionsmittel, wie beispielsweise sogenannter Herdofenkoks. Die Aufbewahrungsbehältnisse sind vorzugsweise sogenannte "Big-Packs".

Die Aufgabe wird gemäß der Erfindung weiterhin gelöst durch ein Verfahren zur Zuführung eines Reinigungsmittels für eine Rauchgasreinigungsanlage zu einer Dosiervorrichtung, bei dem mehrere Aufbewahrungsbehältnisse mit dem Reinigungsmittel von einer Sammelvorrichtung aufgenommen werden und ein Aufbewahrungsbehältnis der Dosiervorrichtung automatisch zugeführt wird, wobei die Aufbewahrungsbehältnisse umlaufen gefördert werden.

Die im Hinblick auf die Anlage erwähnten Vorteile und bevorzugten Ausgestaltungen sind sinngemäß auf das Verfahren zu übertragen.

Ausführungsbeispiele der Erfindung werden im Folgenden anhand der Zeichnung näher erläutert. Es zeigen jeweils in schematischer Darstellung:
- FIG 1: eine stark vereinfachte Darstellung einer Anlage zur Rauchgasreinigung mit einer Sammelvorrichtung,
- FIG 2: die Sammelvorrichtung nach FIG 1 in einer Aufsicht, und
- FIG 3: eine weitere Ausführungsform einer Sammelvorrich- tung.

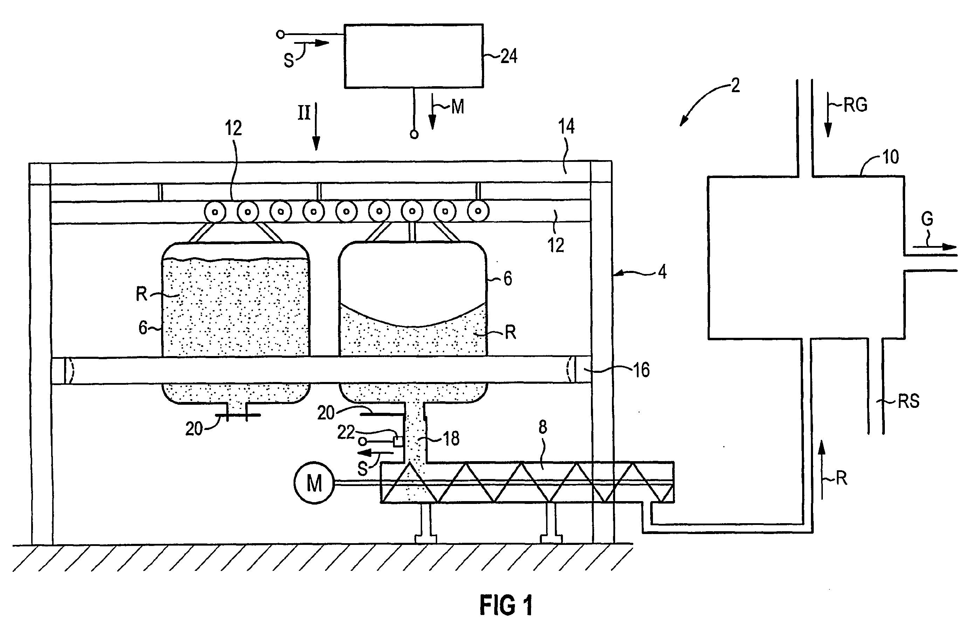

Eine Anlage zur Rauchgasreinigung 2 gemäß FIG 1 umfasst eine Sammelvorrichtung 4, in der mehrere Aufbewahrungsbehältnisse 6 angeordnet sind, die zur Aufbewahrung eines Reinigungsmittels R dienen. Die Anlage 2 weist weiterhin eine als Dosierschnecke ausgebildete Dosiervorrichtung 8 sowie einen Rauchgasreinigungsbereich 10 auf, dem das Reinigungsmittel R von der Dosiervorrichtung 8 zugeführt wird. Der Rauchgasreinigungsbereich 10 umfasst in der Regel eine Vielzahl von Komponenten, die in einer Anlage zur Rauchgasreinigung 2 zusammenwirken, um ein Rauchgas RG zu reinigen. Dieses Rauchgas RG wird dem Rauchgasreinigungsbereich 10 zugeführt und verlässt ihn als Reingas G. Bei der Rauchgasreinigung wird das Reinigungsmittel R verbraucht und es fällt ein Reststoff RS an, der aus dem Rauchgasreinigungsbereich 10 abgeführt wird.

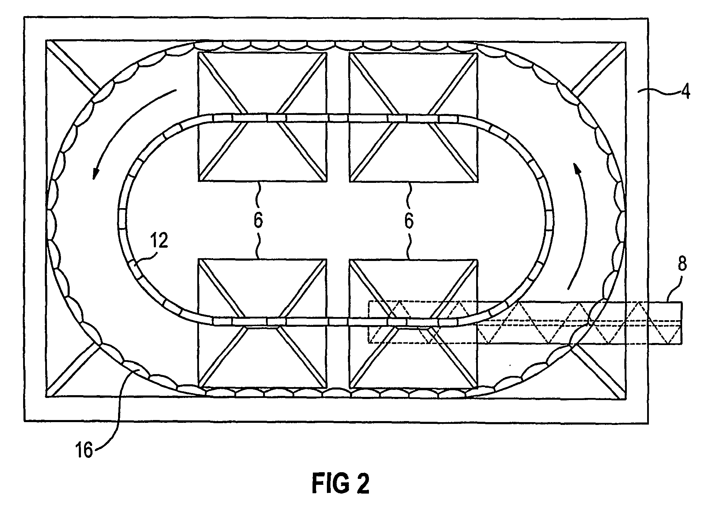

Wie den FIG 1 und 2 zu entnehmen ist, sind die Aufbewahrungsbehältnisse 6 in der Sammelvorrichtung 4 an einer Sammelschiene 12 aufgehängt, welche an einer Stützkonstruktion 14 befestigt ist. Zur Führung der Aufbewahrungsbehältnisse 6 ist ein Führungselement 16 in Form einer Führungsschiene oder eines Führungsbalkens vorgesehen. Dieses Führungselement 16 gewährleistet, dass das jeweilige Aufbewahrungsbehältnis 6, welches der Dosiervorrichtung 8 zugeführt wird, positionsgenau über einen Einfülltrichter 18 der Dosiervorrichtung 8 gelangt. Vorzugsweise wird beim Verschieben des Aufbewahrungsbehältnisses 6 über den Einfülltrichter 18 automatisch eine Auslaufsperre 20 geöffnet, die in geschlossenem Zustand ein Austreten des Reinigungsmittels R aus den Aufbewahrungsbehältnissen 6 verhindert.

Sobald das Reinigungsmittel R des Aufbewahrungsbehältnisses 6, welches über der Dosiervorrichtung 8 momentan angeordnet ist, aufgebraucht ist, wird automatisch das leere Aufbewahrungsbehältnis 6 mit einem vollen Aufbewahrungsbehältnis 6 ausgetauscht. Hierzu werden die Aufbewahrungsbehältnisse 6 mit Hilfe eines nicht näher dargestellten Motorantriebs entlang der Sammelschiene 12 verfahren. Vorzugsweise ist die Sammelschiene 12 dabei als eine umlaufende Sammelschiene 12 ausgebildet, wie dies der Figur 2 zu entnehmen ist.

Zweckdienlicher Weise wird automatisch erfasst, wenn das jeweilige Aufbewahrungsbehältnis 6 über der Dosiervorrichtung 8 leer ist. Hierzu ist ein geeignetes Sensorelement 22 vorgesehen, welches im Ausführungsbeispiel nach Figur 1 als Füllstandsmesser am Einfülltrichter 18 ausgebildet ist. Alternativ besteht auch die Möglichkeit dieses Sensorelement 22 als Gewichtssensor auszubilden und es beispielsweise an der Sammelschiene 12 anzuordnen, um das Gewicht des jeweiligen Aufbewahrungsbehältnisses 6 zu messen. Vom Sensorelement 22 wird ein Sensorsignal S an eine Steuereinheit 24 abgegeben, welche ein Motorsignal M an den nicht dargestellten Motor für die Sammelschiene 12 weiterleitet, um diesen zu aktivieren, wenn das Aufbewahrungsbehältnis 6 leer ist.

Eine derartige Anlage 2 hat den wesentlichen Vorteil, dass die Zuführung des Reinigungsmittels R zu der Dosiervorrichtung 8 einerseits automatisch erfolgt. Ist die Steuereinrichtung 24 und das Sensorelement 22 vorgesehen, so erfolgt die Versorgung der Dosiervorrichtung 8 mit dem Reinigungsmittel R vollautomatisch. Dadurch ist ein Eingriff des Betriebspersonals nicht notwendig und der Wechsel der Aufbewahrungsbehältnisse 6 ist kostengünstig. Andererseits entfällt die Notwendigkeit einer zusätzlichen Lagerhaltung, da die Sammelvorrichtung 4 eine Anzahl von Aufbewahrungsbehältnissen 6 aufnimmt.

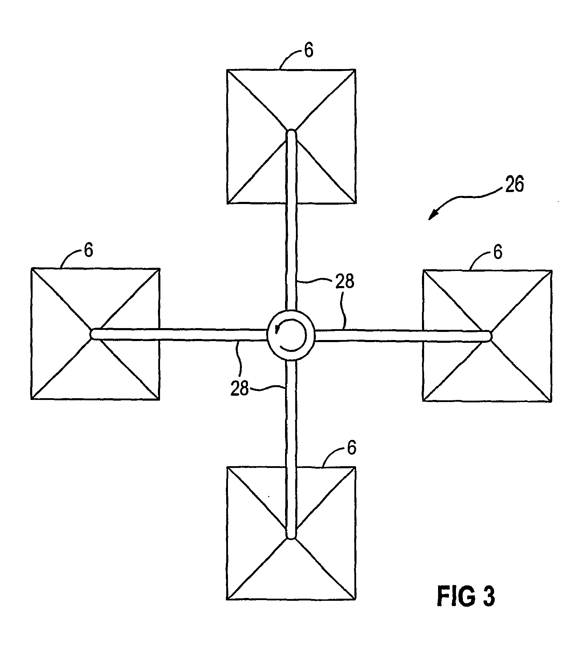

Anstelle der gemäß Figur 1 und 2 dargestellten umlaufenden Sammelschiene 12 als Fördereinheit ist eine Fördereinheit gemäß Figur 3 als eine drehbare Einheit 26 mit im Ausführungsbeispiel vier Lastarmen 28 ausgebildet. An den Lastarmen hängen wiederum die Aufbewahrungsbehältnisse 6. Durch eine Drehung der drehbaren Einheit 26 werden die Aubewahrungsbehältnisse 6 ausgewechselt.

## Patentansprüche

1. Anlage (2) zur Rauchgasreinigung mit einer Dosiervorrichtung (8) für ein Reinigungsmittel (R), welches aus einem Aufbewahrungsbehältnis (6) der Dosiervorrichtung (8) zuführbar ist, **dadurch gekennzeichnet, dass** zur Aufnahme mehrerer Aufbewahrungsbehältnisse (6) eine Sammelvorrichtung (4) vorgesehen ist, mittels der die Aufbewahrungsbehältnisse (6) automatisch zu der Dosiervorrichtung (8) verfahrbar sind, wobei die Sammelvorrichtung (4) eine Fördereinheit (12,16) zum Verfahren der Aufbewahrungsbehältnisse (6) aufweist, und wobei die Fördereinheit (12,26) umlaufend ausgebildet ist..

2. Anlage (2) nach Anspruch 1, bei der die Fördereinheit als Sammelschiene (12) ausgeführt ist, an die die Aufbewahrungsbehältnisse (6) einhängbar sind.

3. Anlage (2) nach Anspruch 1 oder 2, bei der die Fördereinheit als drehbare Einheit (26) mit Lastarmen (28) ausgestaltet ist, an die jeweils ein Aufbewahrungsbehältnis (6) anhängbar ist.

4. Anlage (2) nach einem der vorhergehenden Ansprüche, bei der das jeweilige Aufbewahrungsbehältnis (6) der Dosiervorrichtung (8) von oben zuführbar ist.

5. Anlage (2) nach einem der vorhergehenden Ansprüche, bei der ein Führungselement (16) zur Führung des jeweiligen Aufbewahrungsbehältnisses (6) beim Verfahren zur Dosiervorrichtung (8) vorgesehen ist.

6. Anlage (2) nach einem der vorhergehenden Ansprüche, bei der das Reinigungsmittel (R) ein Schüttgut ist.

7. Verfahren zur Zuführung eines Reinigungsmittels (R) für eine Rauchgasreinigungsanlage (2) zu einer Dosiervorrichtung (8), bei dem mehrere Aufbewahrungsbehältnisse (6) mit dem Reinigungsmittel (R) von einer Sammelvorrichtung (4) aufgenommen werden und ein Aufbewahrungsbehältnis (6) der Dosiervorrichtung (8) automatisch zugeführt wird, wobei die Aufbewahrungsbehältnisse (6) umlaufend gefördert werden.

## Claims

1. System (2) for flue gas purification, having a metering device (8) for a purifying agent (R), which can be fed to the metering device (8) from a storage container (6), **characterized in that** there is a collection device (4) for receiving a plurality of storage containers (6), by means of which collection device the storage containers (6) can automatically be moved to the metering device (8), the collection device (4) having a conveyor unit (12, 16) for moving the storage containers (6) and the conveyor unit (12, 26) being of revolving design.

2. System (2) according to Claim 1, in which the conveyor unit is designed as a distribution rail (12), from which the storage containers (6) can be suspended.

3. System (2) according to Claim 1 or 2, in which the conveyor unit is configured as a rotatable unit (26) with load-bearing arms (28) from each of which a storage container (6) can be suspended.

4. System (2) according to one of the preceding claims, in which the corresponding storage container (6) can be fed to the metering device (8) from above.

5. System (2) according to one of the preceding claims, in which there is a guide element (16) for guiding the corresponding storage container (6) during its movement to the metering device (8).

6. System (2) according to one of the preceding claims, in which the purifying agent (R) is a bulk material.

7. Method for supplying a purifying agent (R) for a flue gas purification system (2) to a metering device (8), in which a plurality of storage containers (6) holding the purifying agent (R) are received by a collection device (4), and a storage container (6) is fed to the metering device (8) automatically, the storage containers (6) being conveyed in a revolving manner.

## Revendications

1. Système ( 2 ) d'épuration de gaz de fumée, comprenant un dispositif ( 8 ) d'addition dosée d'un agent ( R ) d'épuration, qui peut être envoyé d'un réservoir ( 6 ) au dispositif ( 6 ) d'addition dosée, **caractérisé en ce qu'**il est prévu, pour la réception de plusieurs réservoirs ( 6 ), un dispositif ( 4 ) collecteur au moyen duquel les réservoirs ( 6 ) peuvent être déplacés automatiquement vers le dispositif ( 8 ) d'addition dosée, le dispositif ( 4 ) collecteur comportant une unité ( 12, 16 ) de convoyeur pour le déplacement des réservoirs ( 6 ) et l'unité ( 12, 26 ) de convoyeur étant constituée sans fin.

2. Système ( 2 ) suivant la revendication 1, dans laquelle l'unité de convoyeur est réalisée sous la forme d'un rail ( 12 ) collecteur auquel les réservoirs ( 6 ) peuvent être suspendus.

3. Système ( 2 ) suivant la revendication 1 ou 2, dans lequel l'unité de convoyeur est constituée sous la forme d'une unité ( 26 ) tournante ayant des bras ( 28 ) de charge auxquels respectivement un réservoir ( 6 ) peut être suspendu.

4. Système ( 2 ) suivant l'une des revendications précédentes, dans lequel le réservoir ( 6 ) respectif peut être envoyé par le haut au dispositif ( 8 ) d'addition dosée.

5. Système ( 2 ) suivant l'une des revendications précédentes, dans lequel un élément ( 16 ) de guidage est prévu pour le guidage du réservoir ( 6 ) lors du déplacement vers le dispositif ( 8 ) d'addition dosée.

6. Système ( 2 ) suivant l'une des revendications précédentes, dans lequel l'agent ( R ) d'épuration est un produit en vrac.

7. Procédé d'envoi d'un agent ( R ) d'épuration pour une installation ( 2 ) d'épuration de gaz de fumée à un dispositif ( 8 ) d'addition dosée, dans lequel plusieurs réservoirs ( 6 ) ayant l'agent ( R ) d'épuration sont reçus par un dispositif ( 4 ) collecteur et un réservoir ( 6 ) est envoyé automatiquement au dispositif ( 8 ) d'addition dosée, les réservoirs ( 6 ) étant convoyés sans fin.
